# EUROPÄISCHE PATENTSCHRIFT

(11) **EP 0 400 766 B1**
(45) Veröffentlichungstag und Bekanntmachung des Hinweises auf die Patenterteilung: **26.07.1995**
(21) Anmeldenummer: 90250117.0
(22) Anmeldetag: 07.05.1990
(51) Int. Cl.: B27N 3/14, B29C 70/02, B29C 43/10

(54) **Verfahren zum Herstellen von bindemittelhaltigen Fasermatten**
Method for producing fibre mats containing a binding agent
Procédé pour fabriquer des nattes en fibres contenant un agent liant

(30) Priorität: 29.05.1989 DE 3917787
(43) Veröffentlichungstag der Anmeldung: 05.12.1990
(73) Patentinhaber: LIGNOTOCK GmbH, D-36205 Sontra (DE)
(72) Erfinder: Kiss, Günter H., I-28040 Lesa (IT)
(74) Vertreter: Bergmann, Jürgen, Dipl.-Ing.

(56) Entgegenhaltungen:
- DE-A- 3 721 663
- DE-B- 1 204 817
- FR-A- 2 266 595
- FR-A- 2 513 939
- US-A- 2 577 205
- US-A- 4 370 289

## Beschreibung

Die Erfindung bezieht sich auf ein Verfahren zum Herstellen von bindemittelhaltigen Fasermatten nach dem Oberbegriff des Anspruchs 1.

Ein derartiges Verfahren zum Herstellen von Fasermatten ist aus der US-A-4 370 289 bekannt. Hierbei handelt es sich um ein Verfahren, bei dem drei trockene Lagen von Holzfasern mit vorgegebener Länge aufeinanderfolgend auf ein Band aufgeschichtet werden, wobei sich jeweils entsprechende Wirrfaservliese aus Nichtstapelfasern bilden. Zwischen diese Holzfaserlagen wird aus einer Schmelze Polymermaterial aufgegeben, dessen Faserdurchmesser durch Schmelzstrecken reduziert worden ist und wobei die Fasern eine Länge von 5 bis 15 inches aufweisen sollen. Über die Dicke dieser die Armierungsfunktionen übernehmenden Zwischenschichten ist im übrigen nichts ausgesagt. Wesentlich ist jedoch, daß hier insbesondere wegen der dort zugrundeliegenden Problematik die verstärkenden Kunststoffasern nicht auf den Oberflächen der Mehrschichtmatte vorliegen, sondern ausschließlich als Zwischenschichten zur Anwendung kommen. Als Deckschichten dienen bei der bekannten Anordnung ausschließlich die Holzfaservliese. Hinzuweisen ist in diesem Zusammenhang insbesondere auch darauf, daß nach dem bekannten Verfahren an eine irgendwie geartete Orientierung der oder wenigstens eines Teiles der Fasern nicht gedacht ist.

Auch ist ein Verfahren zum Heißpressen von Formteilen bekannt, bei dem für den Verformungsvorgang wenigstens einseitig zwischen die formgebende Oberfläche des Formwerkzeuges und das Mattenvlies eine Stabilisierungsauflage eingebracht wird (DE-OS 37 21 663), das sich dadurch auszeichnet, daß als Stabilisierungsauflage eine, an sich in Oberflächenrichtung Zugkräfte aufnehmende, im wesentlichen dehnungsfreie, jedoch unter der Wärmebeaufschlagung innerhalb der Heißpresse plastisch verformbare Faserverbundschicht verwendet wird, die mit und/oder unmittelbar nach dem Ausformungsvorgang zu einer weitgehend dehnungsfreien, unflexiblen Beschichtung aushärtet bzw. sich verfestigt.

Hierbei wird ein Faservliesgemisch aus Lignozellulosefasern und Baumwollfasern verwendet, welches mit in der Wärme aushärtenden Bindemitteln vermischt ist. Dieses Faservliesgemisch wird gewissermaßen zwischen zwei in Oberflächenrichtung im wesentlichen dehnungsfreie Stabilisierungsauflagen eingebettet und vor der Verformung dieses Rohmattenzuschnittes wird ein Verbund zwischen den einzelnen Schichtungen hergestellt, so daß während der Formgebung, also dem Preßvorgang, auftretende Zugkräfte störungsfrei aufgenommen werden können. Die hierfür erforderliche Haftung zwischen den flexiblen Stabilisierungsauflagen und der Oberfläche des Faservliesgemisches ergibt sich dadurch, daß im Temperaturbereich zwischen 60 und 150° C eine warmfeste Selbsthaftung erfolgt. Die ein- oder beidseitig auf ein Mattenvlies aufzubringende Stabilisierungsauflage kann nach diesem Stand der Technik entweder durch Aufrieseln einer oder mehrerer Lagen hochfester Fäden auf das Mattenvlies gebracht werden, sie kann jedoch auch in bereits vorgefertigter Form als Wirrfaservliesverbund vorliegen. Die warmfeste Haftvermittlung zwischen der Stabilisierungsauflage und der eigentlichen Holzfasermatte wird über mehrere Faserlagen verteilt, um die genannte Zugkraftübertragung sicherstellen zu können.

Es ist in diesem Zusammenhang auch nicht mehr neu, die Stabilisierungsauflage so zu verarbeiten und auszuführen, daß ihre Luftdurchlässigkeit sowohl vor als auch nach dem Verformungsvorgang der Fasermatte zu einem Formteil erhalten bleibt. Hierfür wird die Dicke der Stabilisierungsauflage gegenüber derjenigen des Faservlieses vernachlässigbar klein gehalten, es wird jedoch grundsätzlich davon ausgegangen, daß entweder auf einer Oberfläche des Holzfaservlieses oder aber auf beiden Oberflächen desselben eine solche Stabilisierungsauflage vorgesehen wird, nicht jedoch im Inneren des Mattenzuschnittes.

Demgegenüber kennzeichnet sich eine weitere bekannte Fasermatte der hier interessierenden Art gerade dadurch, daß zur Stabilisierung für den Ausformvorgang und damit die Kräfteübertragung in die Mitte des Wirrfaservlieses ein festes Gewebe eingelegt wird, welches dort als eine Art Zugnetz verbleibend die Zug- und Scherkräfte aufnehmen soll. Die in die Faservliesmatte eingebetteten Gewebe werden von den Zugkräften seitens des Verformungswerkzeuges jedoch erst dann erreicht, wenn diese von den formgebenden Werkzeugflächen bereits auf den Faserwerkstoff übertragen sind. Dies führt in der Regel schon zu erheblichen Schäden in der Struktur der Fasermatte noch bevor vom Formwerkzeug die stabilisierende Gewebeeinlage erreicht ist und damit in Funktion treten kann.

Es sind daher Versuche unternommen worden, Faservliesmatten herzustellen, die aus einem weitgehend homogenen Gemisch von für den Ausformungsvorgang nicht belastbaren Zellulose- bzw. Lignozellusefasern und Zug- und Scherkräfte aufnehmenden längeren Synthesefäden oder dergleichen bestehen. Hierbei hat sich jedoch gezeigt, daß zumindest in der Großfertigung die erforderliche homogene Durchmischung der unterschiedlichen Faserarten, insbesondere ihr homogenes Aufrieseln auf ein Transportorgan zur Herstellung des Faservlieses technisch nicht realisierbar ist. Die Schüttcharakteristika der unterschiedlichen Faserarten führen stets zu einer unerwünschten und weitgehend unkontrollierbaren Entmischung der einzelnen Fasersorten. Die damit verbundene erhebliche Qualitätsminderung der fertigen Fasermatte läßt sich nur mit einem erhöhten Einsatz an teueren Synthesefasern einigermaßen wettmachen, was dann neben der Verteuerung des Produktes jedoch auch noch zu dem Nachteil der Luftundurchlässigkeit der Fasermatte führt.

Der vorliegenden Erfindung liegt daher die Aufgabe zugrunde, ein Verfahren zur Herstellung von Fasermatten aus einer Mischung von Holz-und Textilfasern vorzugeben, mit dem sich bei einem Minimum an Synthesefaseranteilen innerhalb der Matte über deren Querschnitt (Dicke) eine statistisch gemittelte homogene Verteilung an Zug- und Schubkräften aufnehmenden Synthesefasern ergibt mit insbesondere auch einem minimierten Synthesefaseranteil im Oberflächenbereich der Matte.

Die Lösung dieser Aufgabe wird erfindungsgemäß durch die Merkmale des Anspruchs 1 erreicht.

Vorteilhafte Weiterbildungen und Ausgestaltungen dieser Aufgabenlösung ergeben sich aus den Unteransprüchen.

Der wesentliche Vorteil eines solchen Mattenaufbaus besteht darin, daß die Zug- und Scherkräfte aufnehmenden Synthesefasern weder auf die äußeren Oberflächenbereiche noch auf eine wie auch immer gestaltete Mittelschicht beschränkt sind und daß bei der Herstellung einer solchen Matte ein nachteiliger Entmischungseffekt,wie er bei einem Synthesefaser- Holzfasergemisch während der Mattenfertigung auftritt, vermieden wird. Es lassen sich in vorteilhafter Weise homogene Verformungseigenschaften durch die Konzentration der zugfesten Synthesefasern in einer Mehrzahl einzelner Synthesefaserschichten erzielen. Der Nachteil, die Zugkräfte auf eine lokalisierte Mittelschicht zu verteilen und über diese auf das Formwerkzeug nur unzulänglich übertragen zu können, entfällt. Auch entfällt die Notwendigkeit der Verwendung einer höheren Synthesefaserkonzentration, entweder in einem Fasergemisch oder beschränkt auf die Deckschichten der Fasermatte mit der dadurch bedingten Behinderung der erforderlichen Gasdurchlässigkeit der Matte für eine zufriedenstellende Verarbeitungsfähigkeit bis hin zum gepreßten Formteil. Die Vielschichtigkeit der Fasermatte erlaubt es, die Synthesefaserkonzentrationen in den einzelnen Schichten extrem gering zu halten bei gleichzeitig maximaler Homogenisierung der Verformungseigenschaften des Faservliesaufbaues. Das geringe Flächengewicht der einzelnen Schichten sichert ein ausreichendes Durchdringen zwischen Holzfasern und Synthesefasern in den Übergangsbereichen und unterstützt damit die Aufgabe des Haftvermittlers zwischen den Schichtanordnungen in besonders vorteilhafter Weise.

Die Haftung zwischen Synthese- und Holzfasern wird dadurch zusätzlich verbessert, daß Synthesefasern verwendet werden, die bei höheren Temperaturen (wie sie beispielsweise beim Plastifizieren der Mattenzuschnitte durch Dämpfen (Dampfbehandlung) auftreten) klebefähig werden, und bei weiterer Temperatursteigerung (Heißpressen zum Fertigteil) schrumpfen. Die Schrumpfung beim Heißpressen wirkt dabei einem Versagen der Matte durch Zug- bzw. Scherbeanspruchung entgegen und verbessert so die Formbarkeit der Matte.

Die Synthesefaserschichten sind aufgerieselt, es können jedoch auch vorgefertigte Wirrfaservliese aus diesem Material eingesetzt werden, die dann als Bahnmaterial von Rollen abgezogen werden, die zwischen den Streuköpfen für die Holzfasern angeordnet sind. Ein besonderer Vorteil ist es bei dieser Verfahrensweise, daß Synthesefaservliese eingesetzt werden können, deren Fasern zumindest teilweise in Vorzugsrichtungen orientiert sind, so daß die für das Verformen der Matten wichtige Zugfestigkeit richtungsorientiert beeinflußbar wird. Darüber hinaus sind vorgefertigte Synthesefaservliese bezüglich der Gleichmäßigkeit ihres Eigenschaftsspektrums besser kontrollierbar, was zu einer Einengung der Mattentoleranz hinsichtlich ihrer Verformungseigenschaften führt.

Die beiliegende Zeichnung soll schematisch die statistische Verteilung der einzelnen Faserarten über die Dicke der Fasermatte wiedergeben. Es zeigen im einzelnen:
- Fig. 1: eine Kurve der Faserhäufung in Abhängigkeit von der Mattendicke, und
- Fig. 2: eine schematische Darstellung einer Vorrichtung zur Durchführung des erfindungsgemäßen Verfahrens.

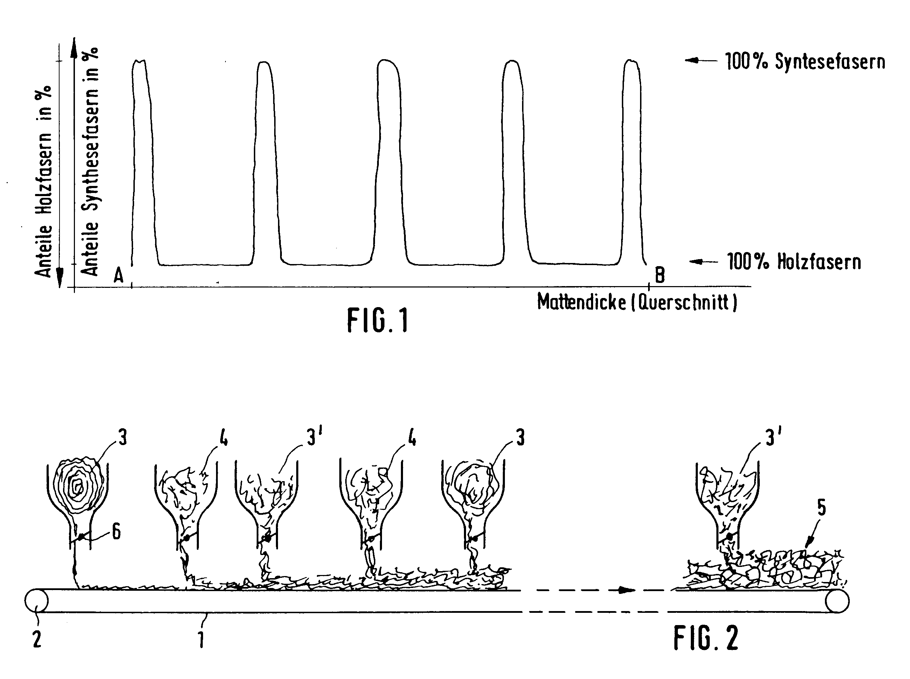

Wie in Fig. 1 dargestellt, ergibt sich für die Häufungsverteilung der Synthesefasern einerseits und der Holzfasern andererseits im Querschnitt über die Mattendicke eine Verlaufskurve, die in etwa einem Kammprofil entspricht, jedoch mit verwischten Flanken, wobei die Basisbreite der Kurvenanteile für die Synthesefasern wesentlich geringer ist als die Basisbreite der Dickenverteilung der Holzfasern. Dargestellt ist über der X-Achse, die den Querschnitt der Matte wiedergibt, mit der einen Mattenoberfläche im Punkt A und der gegenüberliegenden Mattenoberfläche im Punkt B, die Häufungsverteilung sowohl der Synthesefasern als auch der Holzfasern, und zwar in Richtung der Y-Achse jeweils der Anteil der Synthesefasern von 0 bis 100 % und in entgegengesetzter Richtung in dieser Achse der Anteil der Holzfasern von 100 bis 0 %. Die verwischten Flanken des jeweiligen Überganges von Synthesefasern zu Holzfasern und umgekehrt stellen symbolisch den Vermischungsgrad zwischen den Fasern in den Übergangsbereichen dar, also die für die Verbindung erwünschte nicht scharfe Trennlinie zwischen Synthesefaserschicht und Holzfaserschicht.

Wie eine derartige statistische Verteilung über die Mattendicke hergestellt wird, zeigt wiederum schematisch im Querschnitt eine Vorrichtung gemäß Fig. 2. Hiernach wird auf eine Förderstrecke 1, beispielsweise einen Bandförderer, mit Umlenkrollen 2 aus einer Mehrzahl von Überkopf-Vorratbehältern alternierend Synthesefasermaterial und Holzfasermaterial aufgebracht. Im Ausführungsbeispiel wird aus einem Vorratsbehälter 3 zunächst Synthesefasermaterial ausgebracht, das dort in Form von rollenförmig aufgewickelten dünnen Wirrfaser-Synthesematten vorliegt, nachfolgend aus einem Überkopf-Vorratbehälter 4 auf dieses Verbundsynthesefasermaterial Holzfasermaterial aufgerieselt und in Bewegungsrichtung der Förderstrecke wiederum nachfolgend aus einem Vorratsbehälter 3′ Synthesefasermaterial wiederum aufgerieselt, wobei hier das Synthesefasermaterial wie auch das Holzfasermaterial in schüttfähiger Form vorliegt. Die Herstellung einer Vielschichtmatte erfolgt dann je nach gewünschter Anzahl der sich abwechselnden Synthesefaser- und Holzfaserschichten mit einer Mehrzahl alternierend hintereinandergeschalteter Überkopf-Vorratbehälter für die einzelnen Fasersorten. Entsprechend der Anzahl der im Verfahrensablauf benutzten Vorratsbehälter 3, 4, 3′, 4 usw.,deren Austrittsöffnung mittels Dosierorganen 6 verschließbar sind und stufenlos regelbar zu öffnen sind, entsteht dann die gewünschte Vielebenenmatte 5. Dem rieselfähigen Holzfasermaterial innerhalb der Überkopf-Vorratbehälter 4 ist in an sich bekannter Weise Bindemittel zugesetzt, es können sowohl in den Vorratsbehältern für die Holzfasern 4 als auch in den Vorratsbehältern 3, 3′ für die Synthesefasern weitere Zusatzstoffe zugesetzt werden. Darüber hinaus können zwischen den einzelnen Vorratsbehältern 3, 4, 3′ Beleimungsstationen oder dergleichen vorgesehen werden. Am Ende der Förderstrecke kann die Vielebenenmatte 5 durch eine Nadelstation geführt werden. Geeignete Abstreiforgane können zwischen den einzelnen Rieselstationen für eine zusätzliche Homogenisierung der jeweiligen Mattenschicht Sorge tragen und dergleichen mehr.

## Patentansprüche

1. Verfahren zum Herstellen von bindemittelhaltigen Fasermatten aus Holzfasern, die durch Heißpressen zu Formteilen, etwa für die Innenverkleidung der Fahrgastzellen von Kraftfahrzeugen oder dergleichen verarbeitet werden, mit stabilisierenden Zusätzen aus Synthesefasern, die die während der Verformung auftretenden Schub- und Zugkräfte wenigstens teilweise aufnehmen, wobei das trockene Fasermaterial schichtweise homogen auf eine Förderstrecke aus Überkopf-Vorratsbehältern aufgetragen wird
durch
ein alternierendes Aufbringen mehrerer Holzfaserschichten und Synthesefaserschichten in der Weise, daß der Übergang von einer Holzfaserschicht zur benachbarten Synthesefaserschicht so ausgebildet ist, daß ein erster Übergangsbereich zwischen einer ersten Holzfaserschicht und der hierzu benachbarten Synthesefaserschicht, über die Dicke der Fasermatte gesehen, so erfolgt, daß mit abnehmendem Anteil an Holzfasern eine Zunahme des Anteils an Synthesefasern erfolgt, daß der nächstfolgende, zweite Übergangsbereich von der vorgenannten Synthesefaserschicht aus gesehen zur zweiten benachbarten Holzfaserschicht in der Weise geschieht, daß mit abnehmendem Anteil an Synthesefasern eine Zunahme des Anteils an Holzfasern erfolgt, so daß sich bei einer graphischen Auftragung des Anteils an Synthesefasern über die Dicke der Fasermatte ein flankenverwischter kammartiger Kurvenverlauf ergibt, wobei der Begriff "flankenverwischt" so zu verstehen ist, daß damit eine gewisse Ungenauigkeit des vorgenannten Kurververlaufes durch das Aufrieseln von Holzfasern und /oder Synthesefasern aus den zugehörigen Vorratsbehältern auf die Förderstrecke entsteht, dadurch gekennzeichnet, daß ein mit Bindemittel durchmischtes trockenes Fasermaterial verwendet wird, wobei als Ausgangsmaterial für die Synthesefasern entweder lose Synthesefasern oder vorgefertigte Faserschichten aus losem Wirrfaserverbund verwendet wird, wobei bei Verwendung der vorgefertigten Faserschichten diese aus orientierten, orthotrop ausgerichteten Synthesefasern bestehen, daß die Anderung der jeweiligen Anteile an Synthesefasern und Holzfasern im ersten Übergangsbereich, über die Dicke der Matte gesehen, sich genauso verhält wie die Änderung der jeweiligen Anteile an Holzfasern und Synthesefasern im zweiten Übergangsbereich und die Dicke jeder der Holzfaserschichten untereinander und diejenige jeder der Synthesefaserschichten untereinander gleich ist, wobei die Dicke der ausschließlich aus Synthesefasern bestehenden Schichten gegenüber derjenigen der Holzfaserschichten klein ist, daß weiterhin die einzelnen Faserhäufungen über geeignete Haftvermittler miteinander verbunden sind und daß schließlich mindestens die Oberflächen der Fasermatten aus Synthesefasern bestehen, die bei höheren Temperaturen wenigstens teilweise klebfähig werden, und bei weiterer Temperaturerhöhung schrumpfen.

2. Verfahren nach Anspruch 1, dadurch gekennzeichnet, daß als Haftvermittler klebfähige Komponenten und/oder mittels Nadeln vernähte Verbindungen verwendet werden.

## Claims

1. Method for producing fibre mats containing binding agent from wood fibres, which are processed by hot pressing to form mouldings, for example for internal linings for passenger compartments in vehicles or similar, with additions of synthetic fibres for stabilisation, which at least partially absorb the shearing and tensile forces occurring during deformation, wherein the dry fibre material is applied evenly in layers onto a conveyor section from overhead storage bins by alternately applying several layers of wood fibres and synthetic fibres so that the structure of the transition from a wood fibre layer to the adjacent synthetic fibre layer is such that a first transition area between a first wood fibre layer and the synthetic fibre layer adjacent thereto is formed so that, with respect to the thickness of the fibre mat, as the amount of wood fibres applied decreases, the amount of synthetic fibres applied increases, the following second transition area from the aforementioned synthetic fibre layer to the second adjacent wood fibre layer is formed so that as the amount of synthetic fibres applied decreases, the amount of wood fibres applied increases, thus resulting in a comb-like curve with indistinct flanks in a graph plotting the amount of synthetic fibres in relation to the thickness of the fibre mat, wherein the term "indistinct flanks" should be understood to mean a certain lack of definition of the aforementioned curve as a result of wood fibres and/or synthetic fibres trickling onto the conveyor section from the respective storage bins, characterised in that a dry fibre material mixed with binding agent is used, and the starting material used for the synthetic fibres is either loose synthetic fibres or pre-fabricated fibre layers made from loose matted fibre composite, and if pre-fabricated fibre layers are used, these are composed of oriented orthotropically aligned synthetic fibres; that, with respect to the thickness of the mat, the change in respective amounts of synthetic fibres and wood fibres in the first transition area behaves exactly like the change in the respective amounts of wood fibres and synthetic fibres in the second transition area, and the thickness of each of the wood fibre layers is equal and that of each of the synthetic fibre layers is equal, and the thickness of the layers composed solely of synthetic fibres is small in relation to that of the wood fibre layers; that additionally, the individual accumulations of fibres are interconnected by means of suitable adhesive means; and that finally at least the surfaces of the fibre mats are composed of synthetic fibres which are capable of adhering at least partially at elevated temperatures and contract at a further increase in temperature.

2. Method according to Claim 1, characterised in that components capable of adhering and/or needle-sewn joints are used as adhesive means.

## Revendications

1. Procédé de fabrication de nattes de fibres contenant un agent liant à partir de fibres de bois, qui sont converties par pression à chaud en pièces moulées, notamment à usage de garnissages internes d'habitacles de voitures automobiles ou analogues, avec des additifs stabilisateurs constitués de fibres synthétiques, qui absorbent au moins en partie les efforts de cisaillement et de traction apparaissant au cours du moulage, la matière fibreuse séchée étant appliquée de manière homogène par couches sur une voie de transport à partir de réservoirs d'alimentation disposés en hauteur par application alternée de plusieurs couches de fibres de bois et de plusieurs couches de fibres synthétiques,de manière que le passage d'une couche de fibres de bois à la couche de fibres synthétiques voisine soit tel qu'il se forme une première zone de passage entre une première couche de libres de bois et la couche de fibres synthétiques voisine de celle-ci, par rapport & l'épaisseur de la natte fibreuse, de sorte que, lorsque la fraction de fibres de bois diminue, la fraction de fibres synthétiques augmente, que la deuxième zone de passage suivant immédiatement de la couche de fibres synthétiques précitée à la deuxième couche de libres de bois voisine se fasse de manière que, lorsque la fraction de fibres synthétiques diminue, la fraction de fibres de bois augmente, de sorte que, lorsqu'on représente graphiquement la fraction de libres synthétiques sur l'épaisseur de la natte fibreuse, on obtienne une courbe en forme de peigne à flancs brouillés, l'expression "à flancs brouillés" devant être comprise dans le sens où il se produit ainsi une certaine imprécision de la courbe précitée par écoulement de fibres de bois et/ou de fibres synthétiques des réservoirs d'alimentation correspondants sur la voie de transport, caractérisé en ce qu'on utilise une matière fibreuse séchée mélangée à un agent liant, dans laquelle on utilise, comme matière de départ pour les fibres synthétiques, soit des fibres synthétiques en vrac, soit des couches fibreuses préformées constituées d'un composite de fibres emmêlées en vrac, lorsqu'on utilise les couches fibreuses préformées, celles-ci sont constituées de fibres synthétiques orientées à alignement orthotrope, la variation des fractions respectives de fibres synthétiques et de fibres de bois dans la première zone de passage, par rapport à l'épaisseur de la natte, se faisant exactement de la même manière que la variation des fractions respectives de fibres de bois et de fibres synthétiques dans la deuxième zone de passage et l'épaisseur de chacune des couches de fibres de bois et celle de chacune des couches de fibres synthétiques étant respectivement égales entre elles, l'épaisseur des couches constituées exclusivement de fibres synthétiques étant faible vis-à-vis de celle des couches de fibres de bois, les amas fibreux individuels étant par ailleurs liés les uns aux autres via des agents adhésifs appropriés et enfin au moins les surfaces des nattes fibreuses sont constituées de fibres synthétiques qui deviennent au moins en partie collantes aux températures élevées et se rétractent lorsqu'on augmente encore la température.

2. Procédé selon la revendication 1, caractérisé en ce qu'on utilise comme agents adhésifs des composants collants et/ou des liaisons aiguilletées.
